# EUROPEAN PATENT APPLICATION

(11) **EP 3 594 873 A1**
(43) Date of publication of application: **15.01.2020**
(21) Application number: 19180749.4
(22) Date of filing: 18.06.2019
(51) Int. Cl.: G06Q 10/08, A47G 29/14, E05B 73/00, G07C 9/00

(54) **DEVICE FOR SECURELY RECEIVING A PACKAGE AND METHOD OF PACKAGE DELIVERY COMPRISING THE USE OF SAID DEVICE**

(30) Priority: 12.07.2018 ES 201830697
(71) Applicant: Maxiocio, S.L., 03002 Alicante (ES)
(72) Inventor: IZQUIERDO GONZALEZ, Julio, 03002 Alicante (ES)
(74) Representative: Temiño Ceniceros, Ignacio

(57) **Abstract**

The present invention relates to a device (1) for securely receiving a package (3), the device (1) being suitable for its attachment to an external element (5) of a door (6), comprising: at least one fastener (4) and a safety lock (7). Advantageously, the device (1) further comprises: a receiving element (7a); a pass-through retaining element (7b); and a container bag (2). Also advantageously: the safety lock (7) is configured for blocking the pass-through retaining element (7b) when said retaining element (7b) is inserted in the receiving element (7a); and the container bag (2) comprises through holes (2') that can be brought together by arranging the pass-through retaining element (7b) therethrough, so that the container bag (2) is closed when the pass-through retaining element (7b) is blocked at the receiving element (7a). The present invention also relates to a system and a delivery method that comprise said device.

## Description

### FIELD OF THE INVENTION

The present invention relates generally to systems and methods for safe mail and parcel delivery. The main field of application of the invention is mainly the field of home parcel delivery methods and logistics and, more specifically, that of mailboxes and security containers and anti-vandalism devices for parcel delivery.

### BACKGROUND OF THE INVENTION

In the last years, the success and substantial increase of online shopping (Amazon, Ebay, etc.) compared to face-to-face shopping has posed a need to develop devices and delivery methods that are safe and efficient for their use in daily home delivery services.

Conventional methods of reception/delivery of packages at home typically involve hand delivery at the home address. To do this, the recipient must remain at home until the delivery service arrives with the package for a proper collection. Therefore, the problem of time and schedule constraints is strongly imposed on the recipient.

On the other hand, if the recipient is not at home at the time of delivery, the delivery service must return to the address another day and, normally, the package must be rehoused in a warehouse in the meantime. Typically, it is necessary to pick it up later and transport it again, with the consequent cost of time and effort on the part of the delivery company. Therefore, there is a problem of efficiency in the delivery/collection of packages at home.

As a solution to that problem, if the recipient is not at home during delivery, the package is sometimes delivered in a mailbox or to another person such as a neighbour, which is a non-safe delivery method and can lead to vandalism or delivery errors.

The technical problem that the present invention addresses is that of providing a container device, a system and a method for the delivery of packages at home, in which the reliability and efficiency of the collection/delivery of a package improves the solutions known from the state of the art and solve the aforementioned problems. In this context, the present invention helps recipients optimizing the process of package reception, as well as improving delivery times for the delivery services.

To sum up, the present invention proposes a solution to said need for the improvement of the efficiency in home package delivery. The invention is aimed at providing a reliable and safe method against vandalism, for the correct collection of the package by the recipient.

The ownership of the device can be of the ecommerce, the delivery service or of third parties providing communication and hub connection platforms for all parties involved in the delivery process.

### BRIEF DESCRIPTION OF THE INVENTION

The object of the present invention relates, without limitation, to the development of a device for securely receiving a package, the device being suitable for its attachment to an external element of a door, such as a door knob or a door handle, the device comprising:
- at least one fastener configured to fasten the device to the external element of the door; and
- a safety lock comprising a locking mechanism to lock the fastener.

Advantageously, the device further comprises:
- a receiving element;
- a pass-through retaining element adapted for its insertion in the receiving element;
- a container bag for containing a package; said container bag comprising a plurality of through holes for receiving the pass-through retaining element.

More advantageously:
- the safety lock comprises a blocking mechanism adapted for blocking the pass-through retaining element when said retaining element is inserted in the receiving element; and
- the container bag is configured so that the through holes can be brought together by arranging the pass-through retaining element therethrough, so that the container bag is closed when the pass-through retaining element is blocked at the receiving element.

Thereby, the invention proposes an improved device for home parcel delivery that is secure/anti-vandalism (thanks to the safety double lock that locks the fastener and also blocks the pass-through retaining element), portable (the delivery service driver can carry it for multiple uses), recipient-independent (since the recipient does preferably not attach nor detach nor configure the device, only opens it to extract the package) and connected (it is a smart device connected to a communication network allowing it to send and receive information autonomously). In this manner, the container bag remains closed while the pass-through retaining element is blocked with respect to the receiving element of the device and the access to the interior of the container bag is prevented.

In yet another preferred embodiment of the present invention, the safety lock is encoded and comprises a keyboard and a plurality of access codes for controlling the locking of the fastener and the blocking of the pass-through retaining element. It is achieved thereby a secure way of open or close the device, without the need of a physical key.

In yet another preferred embodiment of the present invention, the pass-through retaining element further comprises at least one stop element to prevent the extraction of the container bag. A more reliable device is thereby achieved, with several means for stopping non allowed persons from stealing the device or the package.

In yet another preferred embodiment of the present invention, the means for connecting the device to the communication network include the capacity to connect and send orders to hardware or software in the recipients' home, such as intercoms or smart home devices or software platforms, to open buildings doors, so that the delivery service driver can reach recipients' home door without his/her intervention.

Preferably, the stop element is fixed at least partially to the container bag. In this manner, it is even more difficult to extract the container bag, because it must be physically separated from other elements.

It is thus another object of the present invention to provide a home parcel delivery system comprising at least one device as previously described, suitable for delivering at least one package in an external element of the home comprising a safety double lock based on the transmission and reception of information through a communication network. Said system comprises a communication network, which connects the device with one or more delivery services, with a recipient, with an intercom or smart home hardware or software allowing opening the door to access the building where recipients' home is and with one or more managers, as well as one or more servers and databases connected to said communication network.

The system of the invention further comprises:
- one or more mobile terminals of the delivery service, configured for its equipment by the delivery service, equipped with means for the reception, reading and registration of package information; said mobile terminals being connected to the communication network via the internet and/or to a mobile connection;
- one or more mobile terminals of the recipient, configured for its equipment by the recipient, equipped with means for receiving information; said mobile terminals being connected to the communication network via the internet and/or to a mobile connection;
- one or more management devices connected to the communication network via the internet and/or a mobile network, said management devices being equipped with means for receiving the transmitted data by the mobile terminals, and with processing means through the server and/or the databases for the generation of distribution protocols and security codes.

A home parcel delivery system is thereby achieved, allowing instant communication between the recipient, the delivery service, the device, the e-commerce provider and/or the managers, and providing an efficient control of one or more deliveries.

In yet another preferred embodiment of the present invention, the system employs a device connected to the communication network through the internet and/or a mobile network, said device equipped with means of receiving the data transmitted by the mobile terminals. In further embodiments of the invention, the device can comprise means for opening one or more secondary doors of a building (such as, for instance, the front or the street door of a building, a fence door, etc.) using the communication network. In these embodiments, said means for opening the secondary doors of the building can include, for example, an intercom connected to the network through a cable or remote connection. Thanks to this embodiment, either the delivery service, the recipient or the managers can remotely manage the access to the building during any of the steps of the delivery or the collection of the package. Preferably, said opening will be controlled by a mobile application installed in a device such as a smartphone, a tablet or the like.

It is achieved thereby a system that allows a direct communication between the device and the communication network, allowing, if required, to skip intermediate communication steps in order to interact with the device. It also allows monitoring the status of the device in real time.

In yet another preferred embodiment of the present invention, the mobile terminals and/or the server of the system are configured with one or more software applications for the generation of management reports of the distribution data associated with the device, or for the generation of notifications to the managers and/or to the delivery service and/or to the recipient.

It is achieved thereby an efficient way of generating reports, protocols, statistical data and to control the distribution of packages in real time.

In yet another preferred embodiment of the present invention, the system further comprises a distribution configuration module, implemented by software and associated with the management devices used by the managers, to organize distributions and/or incorporate maps, geographic locations, devices or vehicles on a map.

In yet another preferred embodiment of the present invention, the server of the system is configured with an analysis module implemented by software, which performs the functions of evaluation and prediction of the performed operations.

In this manner, simulations and statistics can play a role for improving management and distribution with the analysis of the collected data and allocating different delivery service drivers for the optimal arrangement and collection of the devices. As mentioned before, the delivery service company/person who attaches a device at a door is not necessarily the same delivery service company/person who detaches it.

Another aspect of the invention relates to a delivery method that makes use of the home parcel delivery system disclosed in the present application, which comprises a device as afore disclosed and comprises the following steps:
a) the fastener is arranged on the external element of the door and said fastener is locked through the introduction of a first access code;
b) at least one package is inserted inside the container bag;
c) the pass-through retaining element is arranged through the through holes of the container bag and the pass-through retaining element is inserted into the receiving element, so that the container bag is closed and hangs from the pass-through retention element;
d) a second access code is generated and transmitted to block the pass-through retention element, so that the access to the interior of the container bag is prevented and the extraction of both the pass-through retaining element and the container bag is impeded.

Preferably, the proposed method further comprises between steps a) and d) the following steps:
a.1) the delivery service registers with the mobile terminal information related to the delivery of at least one package;
a.2) said registered information is sent from the mobile terminal of the delivery service through the communication network to the recipient and/or to the one or more managers, who receive it;
a.3) the second access code is sent from the mobile terminal of the recipient and/or from the one or more management devices for its introduction into the keyboard of the safety lock in step d).

More preferably, the proposed method further comprises the following steps, later when the recipient is home, in order to collect the package:
e) the recipient enters the second access code on the keyboard of the safety lock that unblocks the pass-through retaining element;
f) the recipient pulls out the pass-through retaining element from the receiving element, and separates the through holes of the container bag from themselves in order to open it, and extracts the package from the inside thereof;
g) the recipient passes the pass-through retaining element through the through holes of the container bag and introduces the pass-through retaining element in the receiving element;
h) the recipient enters the second access code on the keyboard of the safety lock to block the pass-through retaining element.

More preferably, the proposed method further comprises the next step between steps f) and g):
f.1) the recipient introduces at least one package inside the container bag for its return or shipment.

More preferably, the proposed method further comprises the following steps, later when the delivery service reaches the home address in order to collect the returned package or a new package:
i) the delivery service enters the second access code on the keyboard of the safety lock that unlocks the pass-through retaining element;
j) the delivery service pulls out the pass-through retaining element from the receiving element and separates the through holes of the container bag from themselves in order to open it and extracts the package from the inside of the container bag.

To sum up, the device for home parcel delivery proposed by the present invention allows an optimal and reliable receiving and efficient collection of a package at a home.

At the same time, the invention does not require a physical intervention at any time by the recipient (either before or during delivery, only at some time after delivery to remove the package from the container), since the device can be installed by the delivery service at the time of delivery and picked up at a later time by himself or another delivery service.

### NUMERICAL REFERENCES USED IN THE DRAWINGS

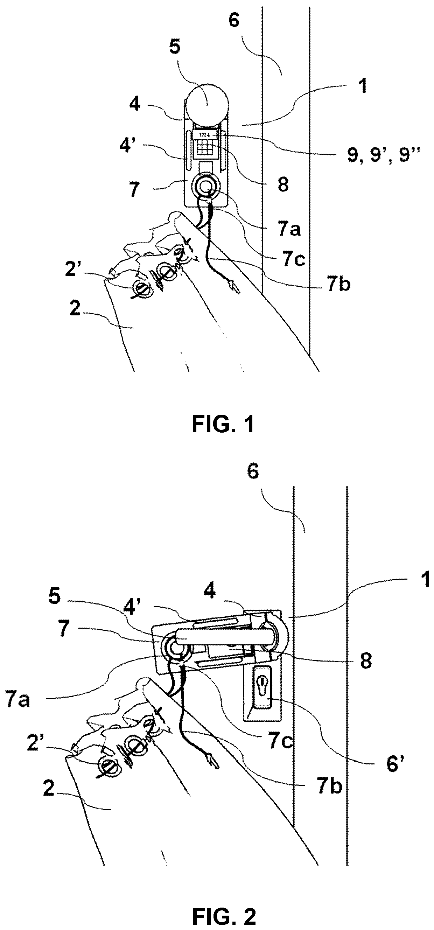

In order to provide a better understanding of the technical features of the invention, the referred Figures 1-9 are accompanied of a series of numeral references which, with illustrative and non limiting character, are hereby represented:

| | |
|---|---|
| (1) | Device |
| (2) | Container bag |
| (2') | Through holes |
| (3) | Package/s |
| (4) | Fastener |
| (4') | Holding elements |
| (5) | External element, such as a knob or a handle |
| (6) | Door |
| (6') | Door lock |
| (7) | Safety lock |
| (7') | Adjustment element |
| (7a) | Receiving element |
| (7b) | Pass-through retaining element |
| (7c) | Stop element |
| (8) | Keyboard |
| (9, 9', 9") | Access codes |
| (10) | Recipient |
| (10') | Mobile terminal of the recipient |
| (11) | Communication network |
| (12) | Server |
| (13) | Database |
| (14) | Managers |
| (14') | Management devices |
| (15) | Delivery service |
| (15') | Mobile terminal of the delivery service |

### DESCRIPTION OF THE DRAWINGS

The features and advantages of this invention will be more apparent from the following detailed description, when read in conjunction with the accompanying drawings, in which:
Figure 1 shows a schematic diagram of the device installed at a knob of a door.
Figure 2 shows a schematic diagram of the device installed at a handle of a door.
Figure 3, 4 and 5 show a schematic diagram of the device.
Figure 6 shows a schematic diagram of the device when the pass-through retaining element is not blocked.
Figure 7 shows a schematic diagram of the device when the pass-through retaining element is blocked and the through holes of the container bag are brought together so the container bag remains closed and the access to the interior thereof is prevented.
Figure 8 shows a schematic diagram of the pass-through retaining element of the device, comprising a stop element, being the pass-through retaining element and the stop element relatively articulated in only one rotation direction with respect to the rotation axis.
Figure 9 shows a schematic diagram of the system and the method of the invention.

### DETAILED DESCRIPTION OF THE INVENTION

In the following description, for purposes of explanation and not limitation, details are set forth in order to provide a thorough understanding of the present invention. However, it will be apparent to those skilled in the art that the present invention may be practiced in other embodiments that depart from these details and descriptions without departing from the spirit and scope of the invention. Certain embodiments will be described below with reference to the drawings wherein illustrative features are denoted by reference numerals.

In a general embodiment according to Figures 1-8, the device (1) for securely home parcel receiving is suitable, without limitation, for being attached, for example to a door knob, a door handle or a window grille.

Said device (1) comprises:
- a container bag (2) for containing a package (3); the container bag (2) comprising a plurality of through holes (2'), so that the through holes (2') can be brought together in order to close the container bag (2) (see Figure 1) when a tension is exerted, for example by a rope or a rod that passes through said through holes (2');
- at least one fastener (4) configured to lock the device (1) to an external element (5) of the door (6), such as a knob or a handle (see Figure 1);
- a safety lock (7) connected to the fastener (4), comprising a locking mechanism, to lock the fastener (4) with respect to the external element (5).

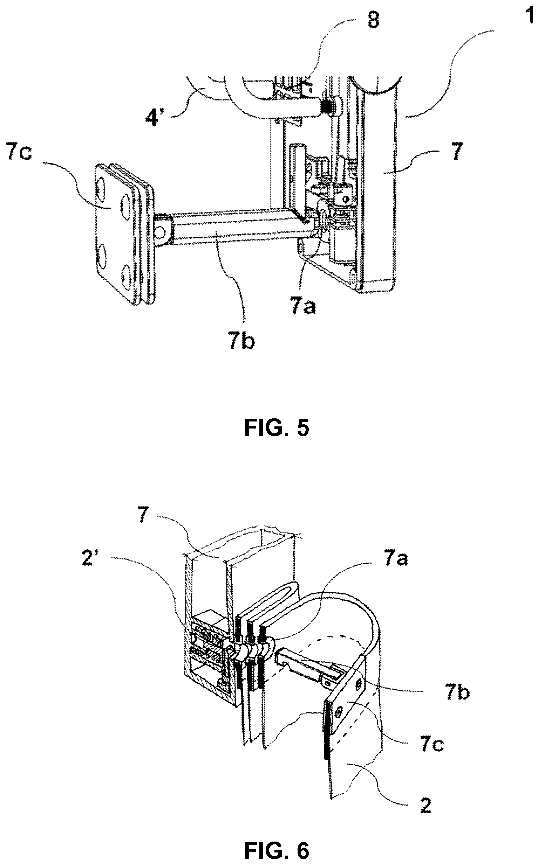

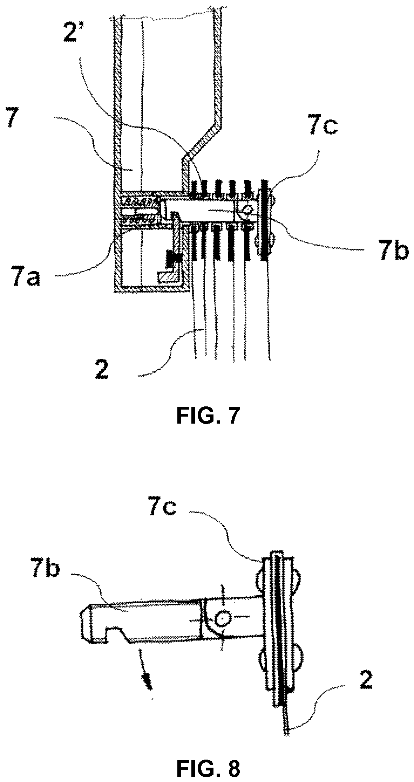

The device (1) further comprises a receiving element (7a) and a pass-through retaining element (7b), such as a rod (Figure 2) or a string (Figure 5). Said pass-through retaining element (7b) is configured to be inserted in the receiving element (7a) of the device (1). The safety lock (7) also comprises a blocking mechanism configured to block the pass-through retaining element (7b) when it is inserted in the receiving element (7a) (Figures 5 and 7). In this manner, when the safety lock (7) blocks the pass-through retaining element (7b), it cannot be extracted from the device (1).

As a consequence of such safety lock (7) and such container bag (2) comprising the plurality of through holes (2'), it is possible to arrange the pass-through retaining element (7b) therethrough, so that the container bag (2) is closed and the access to the interior thereof is prevented when the pass-through retaining element (7b) is blocked at the receiving element (7a). It is achieved thereby, the secure hanging of a container bag (2) at an external element (5) of a door (6).

As described in preceding sections, the main advantage of the proposed device (1) of the invention is that it takes advantage of the two locks: a first lock securing the device (1) to the external element (5) of the door (6) while, at the same time, the container bag (2) is retained thanks to the second lock, blocking the pass-through retaining element (7b) that holds the container bag (2) with the package (3) in the interior thereof.

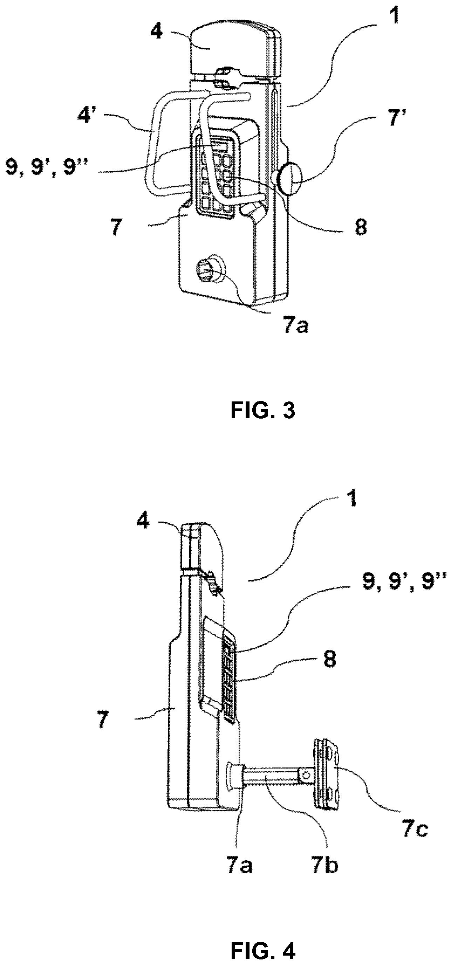

In this embodiment, the safety lock (7) is electronic and encoded, as shown in Figure 3, comprising a keyboard (8) and a plurality of access codes (9, 9', 9") for controlling the locking of the fastener (4) and the blocking of the pass-through retaining element (7b).

In this manner, a first access code (9) can be employed for the locking of the fastener (4) while a second access code (9') can be employed for the blocking of the pass-through retaining element (7b). Furthermore, such codes can be changed or generated multiple times if required.

In another embodiment of the invention, the device (1) comprises an adjustment element (7') in order to achieve the optimal left space between the fastener (4) and the safety lock (7).

Optionally, the device (1) comprises one or more holding elements (4'), configured to prevent a substantial rotation of the device (1) with respect to the external element (5) of the door (6) while the fastener (4) is locked, as shown in Figure 2, where the handle or crank is not closed at an end. In this manner, the configuration of the holding elements (4') according to Figure 2 impedes the extraction of the device (1) while locked. For instance, in a situation as in Figure 2, if a burglar tried to extract the device (1), a rotation of the same at least in the perpendicular and parallel plane with respect to the sheet would be required, but then the device (1) would bump into the holding elements (4') and the burglar would not be able to remove the device (1) hanging from the external element (5) of the door (6), at least without breaking the device or the handle.

Such holding elements (4') can be adjustable with respect to the external element (5) (which can be not only a knob or a handle, but also a fence at the door (6)), reducing the space between the holding elements (4') and the external element (5) to a minimum, making the device (1) much more secure in case of a theft trial.

Furthermore, as shown in Figure 2, the device (1) can be installed so that the door lock (6') is not covered up, allowing a normal use of the door (6) (opening/closing) even in the presence of the device (1) locked.

Preferably, the pass-through retaining element (7b) comprises a stop element (7c) configured so that when the pass-through retaining element (7b) is arranged through the through holes (2') and it is inserted and blocked in the receiving element (7a), the container bag (2) remains closed and it is impossible to extract it without tearing apart the device (1) or the container bag (2).

More preferably, the stop element (7c) is fixed to the container bag (2), as shown in Figure 6. Even more preferably, the pass-through retaining element (7b) is articulated with respect to the stop element (7c), so that both container bag (2) and pass-through retaining element (7b) can be removed together and transported or used again in another different device (1).

Optionally, the device (1) comprises a BiDi or QR (Quick Response) code attached at its external surface, so that it can be univocally identified in order to keep a registration of each installed device (1).

Optionally, the device (1) comprises an alarm.

The container bag (2) can contain more than one package (3) in the interior thereof. The container bag (2) can be a box or any other flexible or rigid case. The container bag (2) can be a folding bag with structural rods. The container bag (2) can comprise a metallic anti-vandalism mesh and/or an alarm. The container bag (2) can comprise an NFC (Near Field Communication) system or any other security system. The container bag (2) can comprise several different materials and have different geometries and it can be of different sizes, depending of the size or type of package (3). The container bag (2) can comprise a water-resistant protective layer.

In a preferred embodiment of the invention, the container bag (2) hangs from the pass-through retaining element (7b), so that the package (3) is protected from the weather (for example, intensive rain or pools) and also protected from small animals that can be at the exterior of the house and could damage the device (1) (for example if it is a food delivery that can attract animals), such as dogs or cats.

In another embodiment of the invention, the device (1) comprises a camera in order to monitor the surroundings of the door (6) in case of vandalism.

In another embodiment of the invention, the device (1) comprises a battery or it comprises indicative LEDs for the status of the device (1).

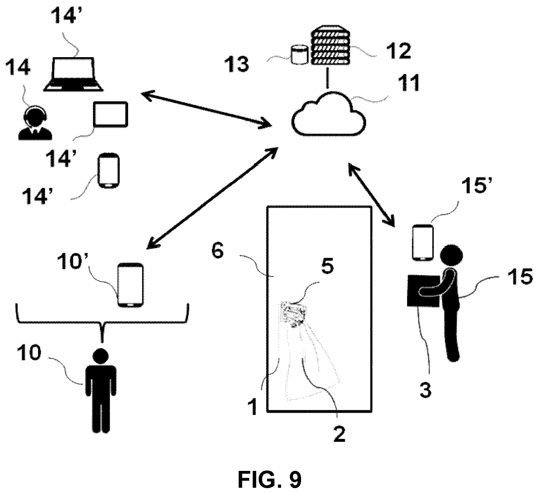

Another object of the invention, according to Figure 9, refers to a home parcel delivery system comprising at least one device (1) according to the aforementioned paragraphs. Such system is suitable for delivering at least one package (3) in an external element (5) of the door (6) of a home, to which a recipient (10) has ordered a parcel delivery.

The system comprises a device (1) with a safety lock (7) based on the transmission and reception of information through a communication network (11) with built-in connectivity; which connects a server (12) and a database (13). Such communication network (11) also connects:
- a recipient (10) that orders the delivery;
- one or more managers (14) that organize and monitor the delivery; and
- a delivery service (15) responsible for the package (3) delivery.

Such system also comprises:
- one or more mobile terminals (15') of the delivery service, configured for its equipment by the delivery service (15), equipped with means for the reception, reading and registration of package (3) information; said mobile terminals (15') being connected to the communication network (11) via the internet and/or to a mobile connection;
- one or more mobile terminals (10') of the recipient, configured for its equipment by the recipient (10), equipped with means for receiving and issuing information; said mobile terminals (10') being connected to the communication network (11) via the internet and/or to a mobile connection;
- one or more management devices (14') connected to the communication network (11) via the internet and/or a mobile network, said management devices (14') being equipped with means for receiving the transmitted data by the mobile terminals (10', 15'), and with processing means through the server (12) and/or the databases (13) for the generation of distribution protocols and security codes (9, 9', 9").

In another embodiment of the invention, the system comprises a device (1) that is connected to the communication network (11) through the internet and/or a mobile network, said device (1) equipped with means of receiving the data transmitted by the mobile terminals (10', 15'), wherein the mobile terminals (10', 15') and/or the server (12) are configured with one or more software applications for the generation of management reports of the distribution data associated with the device (1), or for the generation of notifications to the managers (14) and/or to the delivery service (15) and/or to the recipient (10).

In another embodiment of the invention, the system comprises a distribution configuration module, implemented by software and associated with the management devices (14') used by the managers (14), to organize distributions and/or incorporate maps, geographic locations or vehicles on a map.

In another embodiment of the invention, the system comprises a server (12) that is configured with an analysis module implemented by software, which performs the functions of evaluation and prediction of the performed distribution operations.

Another object of the invention refers to a method of home parcel delivery that employs the afore-described system. In the method of the invention, when a recipient (10) shops and orders the delivery of a package (3) with his mobile terminal (10'), such as a tablet, a computer or a mobile phone, said order reaches the management devices (14') equipped by the managers (14) through the communication network (11), the server (12) and the database (13). Then, the managers (14) process and arrange the shopping order and generate the order of the delivery of the package (3) to the recipient's home. The managers (14) also assign the delivery to a delivery service (15).

The assigned delivery service (15) gets to the address for the delivery of the package (3). At that moment, if the recipient (10) is not at home, the delivery service (15) installs the device (1) at the external element (5) (knob or handle) of the door (6) by the following steps:
- firstly, the delivery service (15) enters a first access code (9) in the keyboard (8) of the safety lock (7) of the device (1) and locks the fastener (4) with respect to the external element (5) of the door (6);
- secondly, the delivery service (15) introduces the package (3) in the interior of the container bag (2), passes the pass-through retaining element (7b) through the through holes (2') and inserts the pass-through retaining element (7b) in the receiving element (7c) of the device (1), closing the container bag (2) and impeding the access to the interior thereof;
- finally, the delivery service (15) enters a second access code (9) in the keyboard (8) of the safety lock (7) of the device (1) and blocks the pass-through retaining element (7b), preventing the extraction of the same.

After the delivery service (15) has secured the device (1) with the package (3) inside the container bag (2), as described, he sends a message from his mobile terminal (15') through the communication network (11) to the server (12) and database (13) and, from there, the message reaches the management devices (14) and the mobile terminal (10') of the recipient (10) (Figure 9). In this manner, the recipient (10) is aware that the package (3) has arrived and it is also possible for the recipient (10) to confirm the receiving and reading of the notification in his own mobile terminal (10').

Alternatively, the delivery service (15) does not complete the delivery until the recipient (10) confirms through his mobile terminal (10) that he is aware that the package (3) has arrived and he orders to proceed with the delivery.

Alternatively, the managers (14) are the ones responsible of generating and sending the second access code (9') to the delivery service (15) so that he can lock the device (1) containing the package (3) to the external element (5) of the door (6).

Optionally, the mobile terminal (15') of the delivery service (15) comprises means of scanning a barcode of the package (3) or similar.

Each one of the aforementioned alternatives generates information about the delivery that reaches the management devices (14'), so that the managers (14) can generate delivery protocols and improve the internal organization of the transportation company.

After the delivery has been made, the delivery service (15) leaves and proceeds with other deliveries in a similar manner.

Later, when the recipient (10) is at home, he can obtain an access code (9') through his mobile terminal (10') in order to enter it in the keyboard (8) of the safety lock (7) and remove the pass-through retaining element (7b), open the container bag (2) and extract the package (3). The recipient (10) communicates the secure collection of the package (3) again through the communication network (11) to the managers (14).

In this manner, through the communication network (11), information relative to the package (3) delivery is transmitted between the managers (14), the delivery service (15) and the recipient (10), which makes the delivery much more efficient. It is achieved thereby a single displacement of the delivery service (15) to the home destination, instead of a tedious standard delivery with the required presence of the recipient (10) at home; where maybe two or three delivery trials must be made, with the consequent disadvantages and lose of time and associated cost, for the recipient (10) and also for the transportation company.

Alternatively, the device (1) can be installed by the recipient (10) instead of by the delivery service (15). In such situation, the delivery service (15) only inserts a compatible pass-through retaining element (7b) together with the container bag (2).

Also alternatively, the whole device (1) can be property of the recipient (10), in which case, the delivery service (15) must ask for the access code (9') through the communication network (11) in order to open and close the container bag (2) and introduce the package (3) in the interior thereof.

In another embodiment of the invention where the device (1) is connected to the communication network (11) through the internet and/or a mobile network and where said device (1) is equipped with means of receiving the data transmitted by the mobile terminals (10', 15'), the access codes (9') can be automatically sent once the identity of the delivery service (15) or the recipient (10) are confirmed.

Optionally, the device (1) is connected to a Wi-Fi (for example, a Wi-Fi of the delivery address), or comprises means for a radio frequency (such as Bluetooth) connection.

Alternatively, a confirmation from the recipient (10) through the communication network (11) is enough in order to generate an order and unblock the device (1) automatically.

In another embodiment of the invention where the device (1) comprises a camera and the device (1) is connected to the communication network (11), a monitoring of the surroundings of the device (1) can be made. Preferably, the device (1) can comprise other sensors that activate the camera.

Optionally, the camera is connected to the communication network (11) through the device (1) and sends information relative to the status of the device (1) to the management devices (14') so that vandalism can be prevented on time.

In a similar way, it is possible to return a package (3) to the transportation company or even send a new package (3) from the home of the recipient (10). In such situation, the recipient (10) can open the container bag (2), introduce a package (3) and close and lock the device (1) with other access codes (9"). After that, he can send a message from his mobile terminal (10') in order to inform the managers (14) that a package (3) should be collected from the external element (5) of his door (6), so the managers (14) can generate a collection order and assign a delivery service (15) to perform such collection.

Other similar combinations can be made so the delivery and collection of a package (3) can be optimized and at any case, the recipient (10) is not obliged to stay at home for each one of the interactions with the transportation company. In further embodiments of the invention, the device (1) or the method for package delivery can comprise means for opening one or more secondary doors of a building (such as, for instance, the front or street door of a building, a fence door, etc.) through the use of the communication network (11). In these embodiments, said means for opening the secondary doors of the building can include, for example, an intercom connected to the network (11) through a cable or remote connection. Thanks to this embodiment, either the delivery service (15), the recipient (10) or the managers (14) can manage the access to the building during any of the steps of the delivery or the collection of the package (3).

To sum up, here we propose a device (1), a home delivery system and a method of home parcel delivery that is much more secure and efficient if compared with the prior art, allowing to solve the afore discussed technical problems, and provides that:
- the recipient (10) does not have to stay at home during the delivery;
- delivery data are stored, and protocols are generated so that each step is registered for its future optimization;
- delivery data can be managed in real time;
- there is a single delivery trial, so time and costs are reduced for a successful delivery;
- the device (1) is secure and anti-vandalism, thanks to the configuration and disposition of its elements.

## Claims

1. Device (1) for securely receiving a package (3), the device (1) being suitable for its attachment to an external element (5) of a door (6), such as a knob or a handle, the device (1) comprising:
- at least one fastener (4) configured to fasten the device (1) to the external element (5) of the door (6);
- a safety lock (7) comprising a locking mechanism to lock the fastener (4);
**characterised in that** the device (1) further comprises:
- a receiving element (7a);
- a pass-through retaining element (7b) adapted for its insertion in the receiving element (7a);
- a container bag (2) for containing a package (3); said container bag (2) comprising a plurality of through holes (2') for receiving the pass-through retaining element (7b);
and also **characterised in that:**
- the safety lock (7) comprises a blocking mechanism configured for blocking the pass-through retaining element (7b) when said retaining element (7b) is inserted in the receiving element (7a); and
- the container bag (2) is configured so that the through holes (2') can be brought together by arranging the pass-through retaining element (7b) therethrough, so that the container bag (2) is closed when the pass-through retaining element (7b) is blocked at the receiving element (7a).

2. Device (1) according to the preceding claim, wherein the safety lock (7) is encoded and comprises a keyboard (8) and a plurality of access codes (9, 9') for controlling the locking of the fastener (4) and the blocking of the pass-through retaining element (7b).

3. Device (1) according to any of the preceding claims, further comprising one or more holding elements (4'), configured to prevent a substantial rotation of the device (1) with respect to the external element (5) of the door (6) while the fastener (4) is locked.

4. Device (1) according to any of the preceding claims, wherein the pass-through retaining element (7b) further comprises at least one stop element (7c) to prevent the extraction of the container bag (2).

5. Device (1) according to the preceding claim, wherein the stop element (7c) is fixed at least partially to the container bag (2).

6. A home parcel delivery system comprising at least one device (1) according to any of the previous claims 2-5, suitable for delivering at least one package (3) in an external element (5) of the home with a safety lock (7) based on the transmission and reception of information through a communication network (11); which connects a delivery service (15) with a recipient (10) and with one or more managers (14), as well as one or more servers (12) and databases (13) connected to said communication network (11),
**characterised in that** it further comprises:
- one or more mobile terminals (15') of the delivery service, configured for its equipment by the delivery service (15), equipped with means for the reception, reading and registration of package (3) information; said mobile terminals (15') being connected to the communication network (11) via the internet and/or to a mobile connection;
- one or more mobile terminals (10') of the recipient, configured for its equipment by the recipient (10), equipped with means for receiving and issuing information; said mobile terminals (10') being connected to the communication network (11) via the internet and/or to a mobile connection;
- one or more management devices (14') connected to the communication network (11) via the internet and/or a mobile network, said management devices (14') being equipped with means for receiving the transmitted data by the mobile terminals (10', 15'), and with processing means through the server (12) and/or the databases (13) for the generation of distribution protocols and security codes (9, 9').

7. System according to the preceding claim, wherein:
- the device (1) is connected to the communication network (11) through the internet and/or a mobile network, said device (1) equipped with means of receiving the data transmitted by the mobile terminals (10', 15'); and/or
- the device (1) comprises means for opening one or more secondary doors of a building through the communication network (11).

8. System according to any of claims 6-7, wherein the mobile terminals (10', 15') and/or the server (12) are configured with one or more software applications for the generation of management reports of the distribution data associated with the device (1), or for the generation of notifications to the managers (14) and/or to the delivery service (15) and/or to the recipient (10).

9. System according to any of claims 6-8, wherein the system comprises a distribution configuration module, implemented by software and associated with the management devices (14') used by the managers (14), to organize distributions and/or incorporate maps, geographic locations or vehicles on a map.

10. System according to any of claims 6-9, wherein the server (12) is configured with an analysis module implemented by software, which performs the functions of evaluation and prediction of the performed distribution operations.

11. Method of package delivery, comprising the use of a device (1) according to any of claims 2-5 and a system according to any of claims 6-10, and further comprising at least the following steps:
a) the fastener (4) is arranged on the external element (5) of the door (6) and said fastener (4) is blocked through the introduction of a first access code (9) on the keyboard (8) of the safety lock (7);
b) at least one package (3) is inserted inside the container bag (2);
c) the pass-through retaining element(7b) is arranged through the through holes (2') of the container bag (2) and the pass-through element (7b) is inserted into the receiving element (7a), so that the container bag (2) is closed and hangs from the pass-through retaining element(7b);
d) a second access code (9') is inserted in the keyboard (8) of the safety lock (7) to block the pass-through retaining element(7b), so that the access to the interior of the container bag (2) is prevented and the extraction of both the pass-through retaining element(7b) and the container bag (2) is impeded.

12. Method according to the preceding claim, further comprising between steps a) and b) the following steps:
a.1) the delivery service (15) registers with the mobile terminal (15') information relating to the delivery of at least one package (3);
a.2) said registered information is sent from the mobile terminal (15') of the delivery service through the communication network (11) to the recipient (10), and/or the delivery service and/or to the one or more managers (14), who receive it;
a.3) the second access code (9 ') is sent to the mobile terminal (10') of the recipient and/or from the one or more management devices (14') and/or from the delivery service for its introduction into the keyboard (8) of the safety lock (7) in step d).

13. Method according to the preceding claim, further comprising the following steps:
e) the recipient (10) enters the second access code (9') on the keyboard (8) of the safety lock (7) that unlocks the pass-through retaining element (7b);
f) the recipient (10) pulls out the pass-through retaining element (7b) from the receiving element (7a), and separates the through holes (2') of the container bag (2) from themselves in order to open it, and extracts the package (3) from the inside thereof;
g) the recipient (10) passes the pass-through retaining element (7b) through the through holes (2') of the container bag (2) and introduces the pass-through retaining element (7b) in the receiving element (7a);
h) the recipient (10) enters the second access code (9') on the keyboard (8) of the safety lock (7) to block the pass-through retaining element (7b).

14. Method according to the preceding claim, which further comprises the next step between steps f) and g):
f.1) the recipient (10) introduces at least one package (3) inside the container bag (2) for its return or shipment.

15. Method according to the preceding claim, which further comprises the following steps:
i) the delivery service (15) enters the second access code (9') on the keyboard (8) of the safety lock (7) that unlocks the pass-through retaining element (7b);
j) the delivery service (15) pulls out the pass-through retaining element (7b) from the receiving element (7a), and separates the through holes (2') of the container bag (2) from themselves in order to open it, and extracts the package (3) from the inside of the container bag (2).
